# FASCICULE DE BREVET EUROPEEN

(11) **EP 4 052 116 B1**
(45) Date de publication et mention de la délivrance du brevet: **10.12.2025**
(21) Numéro de dépôt: 20808493.9
(22) Date de dépôt: 27.10.2020
(51) Int. Cl.: G06F 3/01, G06F 3/04886

(54) **PROCÉDÉ D'INTERACTION AVEC UN UTILISATEUR D'UN SYSTÈME IMMERSIF ET DISPOSITIF POUR LA MISE EN OEUVRE D'UN TEL PROCÉDÉ**
VERFAHREN ZUR INTERAKTION MIT EINEM BENUTZER EINES IMMERSIVEN SYSTEMS UND VORRICHTUNG ZUM IMPLEMENTIEREN EINES SOLCHEN VERFAHRENS
METHOD FOR INTERACTION WITH A USER OF AN IMMERSIVE SYSTEM AND DEVICE FOR IMPLEMENTING SUCH A METHOD

(30) Priorité: 29.10.2019 FR 1912120
(43) Date de publication de la demande: 07.09.2022
(73) Titulaire: Immersion, 33100 Bordeaux (FR)
(72) Inventeur: RAYMOND, Félix, 33300 Bordeaux (FR); DE LA RIVIERE, Grégoire, 33110 Le Bouscat (FR)
(74) Mandataire: Santarelli
(86) Numéro de dépôt international: PCT/FR2020/051937
(87) Numéro de publication internationale: WO 2021/084198

(56) Documents cités:
- US-A1- 2016 358 383
- US-A1- 2019 139 313
- US-A1- 2019 317 974

## Description

### Domaine technique

L'invention appartient au domaine des technologies immersives et collaboratives.

Plus particulièrement, l'invention appartient au domaine de la collaboration entre des utilisateurs de réalité virtuelle ou de réalité augmentée et des spectateurs desdits utilisateurs.

### Technique antérieure

Les outils logiciels de réalité virtuelle et de réalité augmentée permettent de visualiser un environnement virtuel idéalement 3D et pouvant comporter un objet, un ensemble d'objets et ou un ensemble complet d'éléments à même de créer un monde virtuel.

Pour supporter plusieurs dispositifs et donc plusieurs collaborateurs, il est connu de réaliser sur chacun des dispositifs :
- une duplication de la base de données ;
- une installation d'un même logiciel ;
- une ouverture de ce logiciel ;
- une transmission et une synchronisation des informations relatives aux paramètres du monde (par exemple interfaces), l'état des éléments décrivant le monde (par exemple transformations 3D) et l'état des différents collaborateurs (par exemple position et orientation de leurs caméras respectives) ;
- une mise à jour de l'état du monde, une visualisation des données 3D, et une représentation virtuelle (par exemple avatars) des autres collaborateurs.

Contrairement aux outils de réalité virtuelle, les outils de réalité augmentée permettent de filmer l'environnement physique et d'y incruster de l'information numérique. Les outils de réalité augmentée sont ainsi également utilisés dans des contextes d'assistance à distance dans lesquels les logiciels connus utilisent tous les mêmes solutions :
- l'opérateur (utilisateur qui a le dispositif de réalité augmentée) regarde l'environnement ;
- l'expert (utilisateur distant spectateur) est le plus souvent sur un dispositif personnel classique, par exemple de type PC ou tablette et voit le champ de vision de l'opérateur ;
- l'opérateur et l'expert lancent deux logiciels différents d'une même solution, un logiciel expert et un logiciel opérateur, lesquels logiciels présentent à chacun des utilisateurs des fonctionnalités différentes ;
- l'expert a accès grâce au logiciel expert à une interface lui présentant un affichage du champ de vision de l'opérateur et lui permettant d'activer un mode annotation libre (c'est-à-dire entourer un objet dans l'affichage de l'environnement de l'opérateur) ou un mode annotation symbolique (c'est-à-dire poser des symboles dans l'affichage de l'environnement de l'opérateur), ces annotations libres ou symboliques étant incrustées dans l'environnement réel de l'opérateur par le logiciel opérateur.

De manière classique, pour envoyer une annotation libre ou symbolique dans l'environnement réel de l'opérateur, les étapes suivantes sont mises en œuvre :
- activation d'un mode « annotation » par l'expert sur le logiciel expert ;
- mise en pause, ou « gel » du flux de la vision de l'opérateur sur le logiciel expert pour qu'il puisse réaliser une annotation de manière précise sur un référentiel fixe (sans subir les changements de points de vue ou les tremblements de l'opérateur, une personne bougeant constamment sa tête, volontairement ou non) ;
- dessin (annotation libre) et ou pose de symboles (annotation symbolique) par l'expert dans la vision « gelée » en deux dimensions du champ de vision de l'opérateur ;
- envoi des annotations au système de l'opérateur puis affichage de ces annotations sur un plan positionné dans l'environnement de l'opérateur.

Les approches ci-dessus présentent les inconvénients suivants :
- dans le cas d'une approche collaborative symétrique selon laquelle l'environnement virtuel est connu aussi bien par l'application de l'opérateur que par l'application de l'expert, et selon laquelle les interactions et interfaces sont communes aux dispositifs de l'opérateur et de l'expert (à des adaptations près, par exemple les interfaces d'une application native de réalité virtuelle sont adaptées aux dispositifs 2D d'un ordinateur conventionnel le cas échéant), les capacités d'interaction avec l'environnement sont très importantes mais les capacités de collaboration avec les autres utilisateurs sont très limitées car il n'y a pas d'outil dédié à cette collaboration ;
- dans le cas d'une approche collaborative asymétrique de l'assistance à distance, dédiée à la collaboration, et selon laquelle l'environnement de l'opérateur n'est pas connu par le logiciel expert, l'absence de connaissance de l'environnement virtuel pousse à réaliser des interactions plus simples comme des annotations, mais l'incrustation de ces annotations dans l'environnement réel, réalisée pour l'opérateur par l'application opérateur, repose sur un certain nombre d'hypothèses et de simplifications qui rendent imprécises l'incrustation des annotations réalisées dès que l'opérateur s'éloigne du point de vue selon lequel elles ont été réalisées par l'expert. Le document US 2016/358383 A1 décrit une solution de réalité augmentée permettant la collaboration entre deux collaborateurs situés dans des lieux physiques différents. L'utilisateur distant peut contrôler son point de vue sur l'emplacement physique où l'utilisateur locale se situe, en ajustant par exemple les commandes d'une caméra ou d'autres réglages du point de vue. Le collaborateur distant peut communiquer des informations (identification d'objets, d'emplacements, de directions ou d'instructions spatiales) avec une référence visuelle ou spatiale à des objets physiques présents dans l'emplacement physique où se situe l'utilisateur local, en lui envoyant directement ces informations. Ces informations apparaissent sous forme d'annotations et sont visualisées en utilisant une technologie d'affichage appropriée.

Par ailleurs, toutes les solutions connues ne permettent de réaliser des annotations que dans ce que voit l'utilisateur opérateur et aucune des solutions connues ne permet à l'utilisateur expert de guider le regard de l'utilisateur opérateur vers un élément ne se situant pas dans son champ de vision.

### Exposé de l'invention

L'invention permet de résoudre les inconvénients de l'art antérieur et permet, dans une seule interface, à la fois un guidage complet, c'est-à-dire éventuellement vers un élément hors de son champ de vision, et précis, c'est-à-dire non impacté par les mouvements de l'utilisateur opérateur de réalité virtuelle ou réalité augmentée.

L'invention concerne un procédé selon la revendication 1.

Dans un mode de mise en œuvre, le marqueur d'orientation reste apparent dans le champ de vision de l'utilisateur opérateur tant que l'utilisateur expert réalise le pointage.

Dans un mode de mise en œuvre, le marqueur d'orientation disparaît automatiquement au bout d'un temps prédéfini après que l'utilisateur expert ait cessé le pointage.

Dans un mode de mise en œuvre, le marqueur d'orientation est actualisé en temps réel en fonction du pointage réalisé par l'utilisateur expert.

Dans un mode de mise en œuvre, au cours de l'étape de déplacement, un guide plan est déterminé par le système d'assistance, en se basant sur un système de coordonnées fourni par le système immersif et sur l'hypothèse qu'un sol de l'environnement d'immersion est à une hauteur guide dans ledit système de coordonnées, ledit guide plan étant affiché sur l'interface expert pour permettre à l'utilisateur expert de réaliser l'au moins un pointage.

Dans un mode de mise en œuvre, la hauteur guide est ajustable de manière dynamique par l'utilisateur expert.

Dans un mode de mise en œuvre, le guide plan est une grille ou un plan transparent ou un plan texturé.

Dans un mode de mise en œuvre, le guide plan est affiché sur l'interface opérateur.

Dans un mode de mise en œuvre, au cours de l'étape de déplacement l'utilisateur expert procède à une pluralité de pointages afin de faire apparaître une trajectoire dans le champ de vision de l'utilisateur opérateur.

Dans un mode de mise en œuvre, au cours de l'étape de déplacement une représentation du champ de vision de l'utilisateur opérateur sur l'interface expert est gelée.

Dans un mode de mise en œuvre, un marqueur de déplacement créé lors de l'étape de déplacement disparaît après un temps de une à cinq secondes après que l'utilisateur expert ait cessé le pointage ayant conduit à la création dudit marqueur.

Dans un mode de mise en œuvre, le procédé selon l'invention comprend par ailleurs une étape de mise en évidence au cours de laquelle l'utilisateur expert attire l'attention de l'utilisateur opérateur sur un élément particulier de son champ de vision au moyen d'au moins un marqueur de mise en évidence créé en réalisant un pointage ponctuel.

Dans un mode de mise en œuvre, le marqueur de mise en évidence est affiché dans le champ de vision de l'utilisateur opérateur pendant une durée inférieure à une seconde.

Dans un mode de mise en œuvre, le procédé selon l'invention comprend par ailleurs une première étape d'annotation, au cours de laquelle l'utilisateur expert fait apparaître dans le champ de vision de l'utilisateur opérateur au moins un marqueur d'annotation.

Dans un mode de mise en œuvre, au cours de la première étape d'annotation, une représentation du champ de vision de l'opérateur est gelée sur l'interface expert.

Dans un mode de mise en œuvre, l'au moins un marqueur d'annotation est affiché dans le champ de vision de l'utilisateur opérateur pendant une durée inférieure à une seconde.

Dans un mode de mise en œuvre, le procédé selon l'invention comporte par ailleurs une seconde étape d'annotation au cours de laquelle l'utilisateur expert fait apparaître dans le champ de vision de l'utilisateur opérateur des marqueurs d'annotation complémentaires.

Dans un mode de mise en œuvre, au cours de la seconde étape d'annotation une représentation du champ de vision de l'utilisateur opérateur sur l'interface expert est gelée.

Dans un mode de mise en œuvre, la représentation du champ de vision de l'utilisateur opérateur est gelée tant que l'utilisateur expert ne quitte pas volontairement ce mode d'annotation et ou tant qu'un temps prédéfini de gel n'est pas écoulé et ou tant que l'utilisateur opérateur ne quitte pas volontairement ce mode.

Dans un mode de mise en œuvre, une nouvelle fenêtre est affichée sur l'interface expert pour afficher la vue en temps réel de l'utilisateur opérateur.

L'invention concerne également un dispositif collaboratif d'immersion comprenant un système immersif, un système d'assistance, des moyens de transmission de données entre ledit système immersif et ledit système d'assistance, le système immersif comportant une application logicielle opérateur implémentant une interface opérateur et un système de traitement numérique, le système d'assistance comportant une application logicielle expert implémentant une interface expert et un système de traitement numérique, ladite interface expert affichant une représentation visuelle d'un champ de vision d'un utilisateur opérateur immergé dans ledit système immersif. Selon l'invention, le dispositif collaboratif d'immersion comporte par ailleurs au moins un outil de pointage et l'interface expert comporte une fenêtre principale divisée en au moins deux zones distinctes contiguës permettant d'interpréter d'au moins deux manières différentes une action de pointage, selon que cette action de pointage est réalisée dans l'une ou l'autre de l'au moins deux zones distinctes, pour faire apparaître sur l'interface opérateur au moins un marqueur d'orientation et au moins un marqueur de déplacement.

Dans un mode de réalisation, le système de traitement numérique du système immersif et le système de traitement numérique du système d'assistance forment un seul et unique système de traitement numérique.

Dans un mode de réalisation, au moins une de l'au moins deux zones distinctes est floutée sur l'interface expert.

Dans un mode de réalisation, la fenêtre principale comporte deux zones distinctes, une zone centrale de forme rectangulaire, placée au centre de ladite fenêtre principale, et une zone périphérique encadrant ladite zone centrale.

Dans un mode de réalisation, une action de pointage dans la zone centrale fait apparaître sur l'interface opérateur un marqueur, et une action de pointage dans la zone périphérique fait apparaître un marqueur ou une annotation.

Dans un mode de réalisation, l'interface expert comporte au moins un élément d'interface permettant de modifier l'interprétation d'une action de pointage dans au moins une de l'au moins deux zones.

Dans un mode de réalisation, l'au moins un outil de pointage comporte une souris ou une surface tactile.

### Brève description des dessins

La figure 1 représente un dispositif collaboratif d'immersion selon l'invention.
La figure 2 représente une fenêtre principale d'une interface expert.
La figure 3 représente schématiquement le procédé d'interaction selon l'invention.
La figure 4 représente un champ de vision de l'opérateur dans lequel apparaît un marqueur d'orientation.
La figure 5A représente un champ de vision de l'opérateur dans lequel apparaît un marqueur de déplacement.
La figure 5B représente une vue de la fenêtre principale de l'interface expert dans laquelle apparaissent un marqueur de déplacement et un guide plan pour aider au positionnement du marqueur de déplacement.
La figure 6A représente un champ de vision de l'opérateur dans lequel apparaît un ensemble de marqueurs de déplacement définissant une trajectoire.
La figure 6B représente une vue de la fenêtre principale de l'interface expert dans laquelle apparaissent un ensemble de marqueurs de déplacement définissant une trajectoire et un guide plan pour aider au positionnement du marqueur de déplacement.

### Description détaillée

Dans la description, les abréviations 2D et 3D sont utilisées en lieu et place des expressions « deux dimensions » et « trois dimensions ».

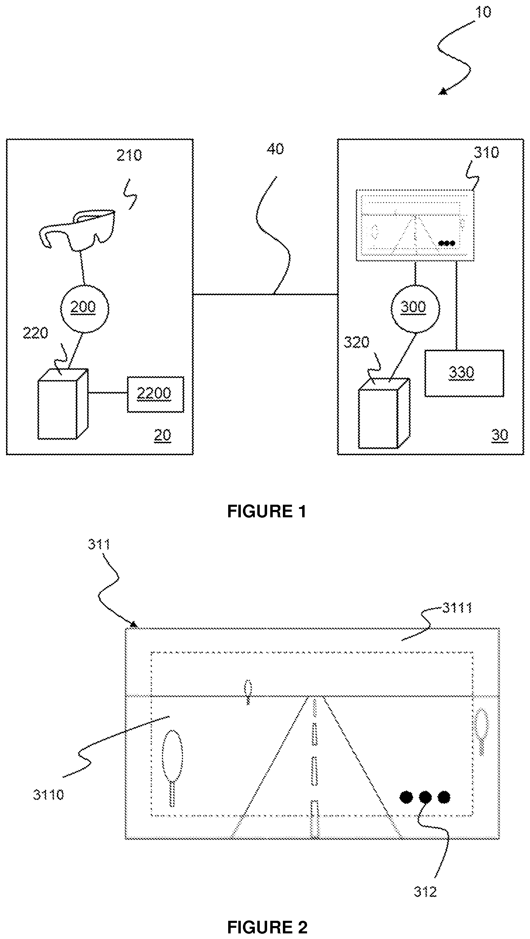

La figure 1 illustre un dispositif collaboratif d'immersion 10 comportant un système immersif 20 et un système d'assistance 30, utilisé respectivement par un utilisateur opérateur (« opérateur » dans la description) et un utilisateur spectateur (« expert » dans la description).

De manière générale, le système immersif 20 et le système d'assistance 30 sont reliés entre eux par des moyens de transmission de données 40. S'ils sont distants, lesdits systèmes peuvent par exemple être reliés par une connexion réseau.

Avantageusement, le système immersif 20 et le système d'assistance 30 peuvent partager la même unité centrale.

Le système immersif 20 et le système d'assistance 30 sont associés respectivement à une application logicielle opérateur 200 et une application logicielle expert 300 implémentant respectivement une interface opérateur 210 et une interface expert 310.

Le système immersif 20 est un système connu comportant un système de traitement numérique 220 comportant une base de données 2200 d'informations numériques décrivant un environnement d'immersion ; l'interface opérateur 210 est apte à afficher des images générées par le système de traitement numérique 220.

On entend par « environnement d'immersion » un environnement visualisé par l'opérateur au moyen du système immersif. Selon la nature du système immersif, il peut s'agir d'un environnement virtuel (réalité virtuelle), d'un environnement réel (par exemple retransmission d'images captées par une caméra), ou un environnement mixte (réalité augmentée ou réalité mixte).

On entend par « environnement virtuel » un environnement déterminé par un ensemble de données numériques définissant les caractéristiques de cet environnement et nécessaires à la construction d'une représentation visuelle de cet environnement tel qu'il doit être perçu par un utilisateur ou un observateur du système immersif.

On entend par « système immersif » un système destiné à restituer en temps réel des impressions sensorielles à un utilisateur par des moyens de stimulation adaptés aux sensations devant être restituées. Le système immersif comprend généralement un ensemble de moyens matériels et logiciels pour au moins : construire un environnement d'immersion à partir d'informations contenues dans une base de données ; calculer une représentation visuelle de cet environnement d'immersion ; afficher des images à l'attention d'au moins un utilisateur ; mesurer la position et la direction d'observation de l'utilisateur dans un référentiel de moyens d'affichage sur lesquels les images sont regardées par l'utilisateur ; les images affichées étant calculées pour représenter l'environnement d'immersion tel qu'il doit être perçu par l'utilisateur suivant ses conditions d'observation de l'environnement d'immersion.

Le système immersif 20 peut aussi bien être un système de réalité virtuelle que de réalité augmentée ou mixte.

Le système de traitement numérique 220 est en pratique un calculateur, de puissance adaptée aux calculs d'images en temps réel, sur lequel sont exécutés des logiciels de calculs d'images de synthèse.

La base de données 2200 comporte l'ensemble des données propres définissant l'environnement d'immersion et nécessaires au calcul d'une représentation visuelle dudit environnement d'immersion, par exemple des données définissant des formes géométriques d'objets, des couleurs desdits objets.

La base de données 2200 comporte également des données relatives au système immersif lui-même, en particulier des paramètres relatifs à l'interface opérateur 210, dont des données géométriques par exemple de dimensions ou de positions.

Le système de traitement numérique 220 reçoit en particulier une position d'observation et une direction d'observation de l'opérateur dans un référentiel d'un environnement réel dans lequel il évolue. La position d'observation et la direction d'observation dans ce référentiel sont transmises au système d'assistance 30 via les moyens de transmission de données 40.

Il est important de noter que, dans le contexte de l'invention, les informations numériques décrivant l'environnement d'immersion et comprises dans la base de données 2200 du système immersif 20 ne sont connues que dudit système immersif, en particulier, le système d'assistance 30 n'a pas connaissance des informations numériques décrivant l'environnement d'immersion.

Le système d'assistance 30 comporte également un système de traitement numérique 320 et outil de pointage 330, par exemple une souris, un pavé tactile, une boule de commande ou une surface tactile.

Le système immersif 20 peut par exemple être un casque de visualisation, et le système d'assistance 30 peut par exemple être un ordinateur, une tablette, un smartphone.

L'interface expert 310 comporte une fenêtre principale 311 représentant le champ de vision de l'opérateur immergé dans un environnement d'immersion. Selon la technologie et ou les données, et comme précisé plus haut, cet environnement peut être exclusivement virtuel, exclusivement réel, ou un mélange d'éléments réels et virtuels. La représentation du champ de vision de l'opérateur dans l'interface expert 310 tient compte d'un niveau de zoom qui peut être statique (c'est-à-dire constant) ou réglable de manière dynamique par l'application logicielle expert 300 et ou par l'expert.

En référence à la figure 2, la fenêtre principale 311 est divisée en deux zones : une zone périphérique 3111 s'étendant de manière continue sur une portion de la fenêtre principale depuis une bordure de ladite fenêtre, et une zone centrale 3110 complémentaire à ladite zone périphérique.

La frontière entre ces zones, représentée sur la figure 2 par un trait interrompu, n'est pas nécessairement matérialisée sur l'interface expert 310 et les deux zones ne se démarquent pas nécessairement visuellement l'une de l'autre.

Dans la forme de réalisation de la figure 2, la fenêtre principale a une forme rectangulaire et la zone périphérique a la forme d'un cadre. La zone périphérique peut être avantageusement représentée graphiquement sur la fenêtre principale 311 par un flou et ou un trait délimitant ladite zone périphérique. L'homme du métier comprendra que les zones centrale 3110 et périphérique 3111 ne sont pas limitées à ces formes, et peuvent présenter d'autres géométries, par exemple la zone centrale 3110 peut avoir une forme elliptique, ou une forme globalement rectangulaire présentant des coins arrondis. L'une des zones peut être discontinue, par exemple une première portion de la zone périphérique 3111 peut être localisée au centre de la fenêtre principale 311, entourée par la zone centrale 310, mais être fonctionnellement associée à une seconde portion de la zone périphérique 3111 située en périphérie de ladite fenêtre principale et entourant la zone centrale 310.

De manière connue, l'interface expert 310 peut comporter des éléments d'interface 312 par exemple de type boutons, ou de type flou sur la périphérie pour symboliser la vision périphérique de l'opérateur. Ces éléments d'interface 312 peuvent être associés à la zone périphérique 3111, à la zone centrale 3110, ou plus ou moins à cheval entre ces deux zones.

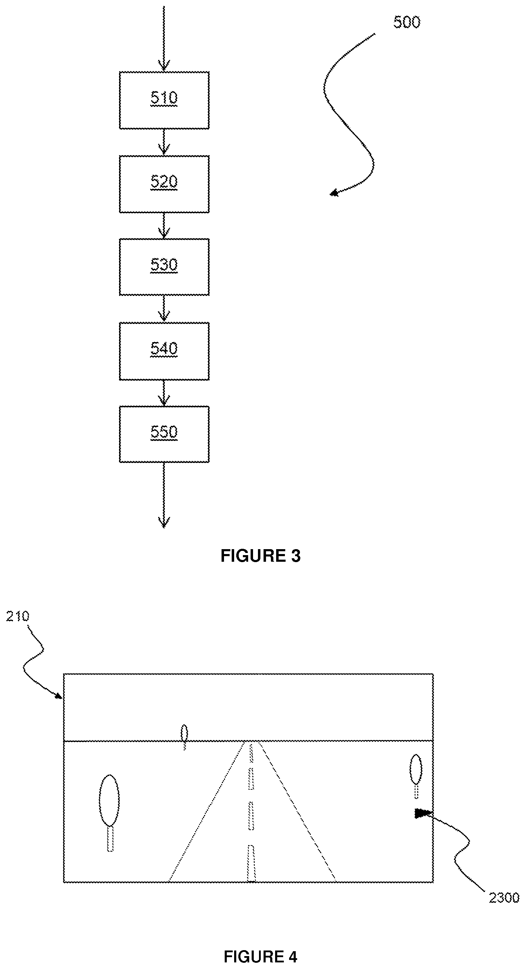

En référence à la figure 3, l'invention concerne un procédé 500 pour permettre à un utilisateur expert de guider un utilisateur opérateur à travers l'environnement d'immersion. Ce procédé tient compte de l'absence de connaissance par le système d'assistance d'informations numériques concernant l'environnement d'immersion et interprète les actions de guidage de l'expert sur la base de ce que voit l'opérateur et non pas sur une connaissance de l'environnement d'immersion.

Au cours d'une première étape d'orientation 510, l'expert attire l'attention de l'opérateur dans une zone située en-dehors de son champ de vision. Pour cela, l'expert réalise un pointage dans la zone périphérique 3111 de la fenêtre principale 311, ledit pointage étant réalisé par un pointeur pouvant être, selon la nature du système d'assistance, une flèche de souris dans le cas d'un ordinateur auquel est branchée une souris, un ou plusieurs doigts dans le cas d'une surface tactile ou tout autre pointeur adapté. La dimension de la zone périphérique doit être suffisante pour permettre à l'expert de manipuler le pointeur dans cette zone sans gêne ou difficulté particulière.

On entend par « pointage » le positionnement d'un pointeur sur l'interface expert et l' « activation » de ce pointeur. A titre d'exemple non limitatif, un pointeur est la flèche d'une souris et l'activation correspond à l'exercice d'une pression sur le bouton de la souris. Le pointeur peut aussi être un doigt de l'expert, et l'activation se fait par contact entre une surface tactile et le doigt. Le pointage cesse lorsque le bouton de la souris est relâché, dans le premier cas, où lorsque l'expert éloigne son doigt de la surface tactile dans le second cas.

Avantageusement, un tel pointage activé dans la zone périphérique 3111 de la fenêtre principale 311 peut être poursuivi hors de la zone périphérique 3111 dans la zone centrale 3110 et produire les mêmes effets tant que ledit pointage ne cesse pas.

Le pointage réalisé par l'expert fait apparaître, sur l'interface opérateur 210 du système immersif 20, au moins un marqueur d'orientation 2300 indiquant à l'opérateur dans quelle direction il doit orienter sa tête. L'au moins un marqueur d'orientation 2300 peut avantageusement être positionné dans son champ de vision périphérique, afin de ne pas gêner sa vision fovéale.

A titre d'exemple non limitatif, l'au moins un marqueur d'orientation peut par exemple être une flèche ou un indicateur de type blob.

La figure 4 illustre un marqueur d'orientation 2300 indiquant à l'opérateur de s'orienter vers la droite.

Il convient de noter que l'application logicielle opérateur 200 et l'application logicielle expert 300 connaissant les position et direction d'observation de l'opérateur dans un référentiel du système immersif 20, il est donc possible de prendre en compte et compenser les mouvements réalisés par l'opérateur au cours de l'étape d'orientation 510 ou de n'importe quelle étape du procédé 500. En particulier, la direction indiquée par l'au moins un marqueur d'orientation 2300 dépend du pointage de l'expert et de l'évolution de la direction du regard de l'opérateur et évolue, aussi bien au niveau de l'interface opérateur 210 qu'au niveau de l'interface expert 310.

La direction indiquée tient également compte du niveau de zoom appliqué à la fenêtre principale 311 de l'interface expert 310.

Des caractéristiques de l'au moins un marqueur d'orientation peuvent varier en fonction des paramètres que sont le temps, la position du pointage de l'expert, la direction du regard de l'opérateur.

En particulier, l'au moins un marqueur d'orientation 2300 peut tendre vers la transparence au fur et à mesure que la direction d'observation de la tête de l'opérateur se rapproche de la zone d'intérêt. Son aspect peut également être fonction d'interactions de l'expert, comme la sélection d'une représentation parmi d'autres via des boutons.

Comme l'ensemble des marqueurs décrits dans la suite de la description, l'au moins un marqueur d'orientation 2300 peut également être animé pour tirer profit de la sensibilité de l'œil au mouvement.

La position du marqueur d'orientation 2300 dans l'interface opérateur 210 est actualisée en temps réel en fonction de la position de pointage par l'expert et de l'évolution de la direction d'observation de l'opérateur.

L'au moins un marqueur d'orientation 2300 peut également disparaître dès lors que l'expert cesse le pointage, ou bien disparaître au bout d'un temps prédéfini après cessation du pointage par l'expert.

Une fois que l'opérateur est correctement orienté, l'expert indique au cours d'une étape de déplacement 520 un point 3D au niveau duquel l'opérateur doit se déplacer dans l'environnement d'immersion.

Il est rappelé ici que l'environnement d'immersion est inconnu du système d'assistance 30.

Le système d'assistance 30 s'appuie donc sur le système de coordonnées fourni par le système immersif 20 et émet l'hypothèse que le sol est à une hauteur guide, par exemple égale à zéro, dans ce système de coordonnées.

Dans un mode de mise en œuvre, la hauteur guide est une hauteur absolue dans le système de coordonnées de l'environnement d'immersion du système immersif, prédéterminée et statique, par exemple sensiblement égale à zéro dans ledit système de coordonnées.

Dans un mode de mise en œuvre alternatif, la hauteur guide est une hauteur relative dans le système de coordonnées de l'environnement d'immersion du système immersif, prédéterminée et statique, par exemple égale à une hauteur moyenne des yeux de l'opérateur, décalée d'un offset.

Dans un mode de mise en œuvre alternatif, la hauteur guide est ajustable de manière dynamique par l'expert, en particulier pour adapter le déplacement de l'opérateur aux spécificités de l'environnement d'immersion de l'opérateur retransmises sur l'interface expert 310 de l'expert, par exemple présence d'un dénivelé dans l'environnement d'immersion.

Dans un mode de mise en œuvre, le sol de l'opérateur dans l'environnement d'immersion est considéré comme le sol physique ou réel de l'opérateur, dont des coordonnées peuvent être déterminées par le système immersif lors d'une phase préalable de calibration.

Le système d'assistance 30 connaissant par ailleurs à tout instant la position et l'orientation de la tête de l'opérateur, il est possible de déterminer un plan correspondant à un sol simulé, et l'afficher en trois dimensions dans la fenêtre principale 311 de l'interface expert 310 sous forme d'un guide plan 2311, à la hauteur guide donnée prise comme hypothèse, de manière statique, ou ajustée de manière dynamique. Dans un mode de réalisation, le guide plan est représenté visuellement sous forme de grille. Dans un autre mode de réalisation, éventuellement combiné au précédent, le guide de type plan est représenté visuellement sous forme de plan transparent. Le guide plan peut également être représenté visuellement sous forme d'un plan texturé.

Le guide plan 2311 est intégré en 3D dans l'environnement d'immersion de l'opérateur et tient compte des conditions d'observation de l'opérateur, à savoir position et orientation de la tête.

L'expert peut ainsi réaliser un pointage sur le guide plan, qui va faire apparaître un marqueur de déplacement 2310 positionnable par l'expert et qui sera rattaché au guide plan lorsque l'expert cessera de pointer. Le marqueur de déplacement indique ainsi à l'opérateur où se déplacer.

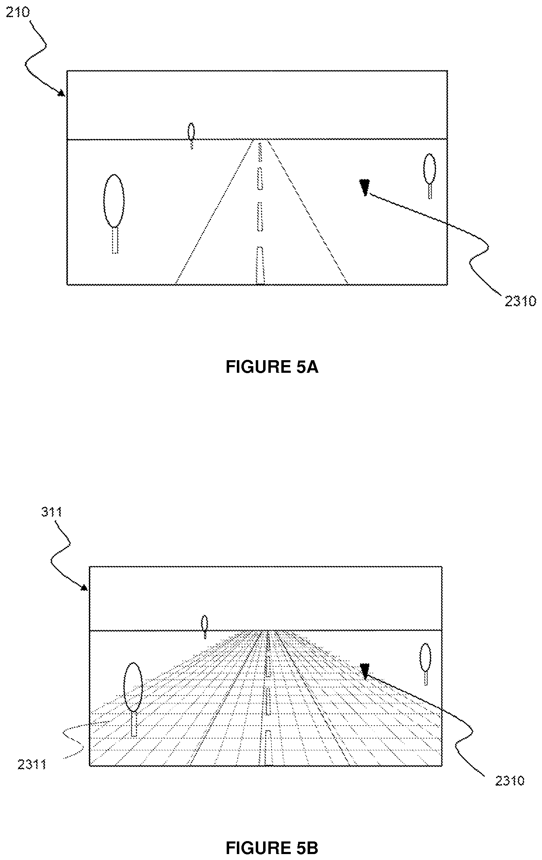

Les figures 5A et 5B illustrent un marqueur de déplacement apparaissant respectivement sur l'interface opérateur et sur l'interface expert.

Si le marqueur de déplacement et ou la position pointée dans la fenêtre principale 311 de l'interface expert 310 n'est pas au-dessus du sol simulé par le guide plan 2311, il est possible de déterminer une projection du point pointé sur le guide plan 2311 (par exemple selon un plan symétrique au plan du sol selon la position de l'utilisateur, ou selon la projection au sol d'une sphère).

Avantageusement, le marqueur de déplacement est affiché dans le champ de vision de l'opérateur dès lors que l'expert réalise un pointage, de sorte que l'opérateur est apte à suivre les mouvements réalisés par l'expert avant que celui-ci ne dépose le marqueur de déplacement sur le sol par cessation du pointage.

Avantageusement, au cours de cette étape, la représentation du champ de vision de l'opérateur est « gelée », c'est-à-dire que la représentation du champ de vision de l'opérateur n'est plus actualisée sur l'interface expert 310. Le « gel » de la représentation du champ de vision de l'opérateur peut ne débuter que lorsque l'expert réalise le pointage.

Le marqueur de déplacement disparaît après une action de l'opérateur ou de l'expert, et ou après un certain temps, par exemple compris entre une seconde et cinq secondes.

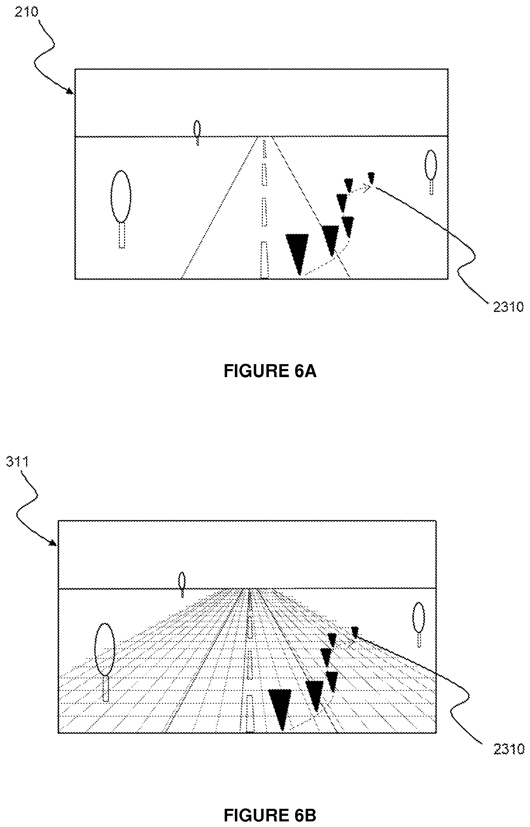

Le guide plan peut être matérialisé sur l'interface opérateur 210 aussi bien que sur l'interface expert 310, de manière partielle (par exemple localement autour du marqueur de déplacement et ou pointeur) ou totalement (par exemple une grille superposée à la visualisation de l'image de l'opérateur. Le guide plan peut également ne pas être matérialisé. En référence aux figures 5B et 6B, le guide plan est affiché sur l'interface expert.

Des caractéristiques du marqueur de déplacement et ou du guide plan peuvent varier en fonction des paramètres que sont le temps, la position du pointeur lors du pointage, la direction du regard de l'opérateur. En particulier, le marqueur et ou le guide plan peuvent être affichés en transparence.

Préférentiellement, le marqueur de déplacement et le guide plan sont affichés sans transparence sur l'interface expert, et avec transparence sur l'interface opérateur, pour diminuer le sentiment que le marqueur de déplacement est placé sur l'environnement d'immersion de l'opérateur, et bien mettre en évidence qu'il est placé sur un sol simulé qui peut être différent du sol de l'environnement d'immersion.

Dans un mode de mise en œuvre alternatif, il est également possible de placer plusieurs marqueurs de déplacement afin de déterminer une trajectoire à suivre par l'opérateur. Dans ce mode de mise en œuvre, la durée d'affichage des marqueurs de déplacement pourra être rallongée afin de permettre le tracé de cette trajectoire.

Les figures 6A et 6B illustrent un tel mode de mise en œuvre. Sur ces figures, l'ensemble des marqueurs de déplacement dessine une trajectoire symbolisée sur les figures par une flèche en trait interrompu, laquelle est représentée sur les figures dans un souci de clarté et de bonne compréhension, mais n'apparaît pas nécessairement en pratique sur les interfaces opérateur et ou expert.

Une fois que l'opérateur est correctement positionné, l'expert attire l'attention dudit opérateur, au cours d'une étape de mise en évidence 530, sur un élément particulier de l'environnement d'immersion. L'élément particulier peut par exemple être un objet ou un groupe d'objets.

Pour cela, l'expert réalise un pointage ponctuel sur l'élément particulier apparaissant sur l'interface expert. On entend par « pointage ponctuel » un pointage pour lequel l'activation du pointeur et la cessation du pointage sont réalisées dans un intervalle de temps très court, correspondant sensiblement à une impulsion. Cela correspond par un exemple à un simple « clic » avec une souris ou à une brève pression avec le doigt dans le cas d'une surface tactile

Ce pointage ponctuel fait apparaître temporairement un marqueur de mise en évidence. Dans un mode avantageux de mise en œuvre, la durée d'apparition du marqueur de mise en évidence est brève, par exemple une demi-seconde, pour tirer profit de la sensibilité de l'œil au mouvement.

Une fois l'attention de l'opérateur attirée sur l'élément particulier, l'expert communique à l'opérateur une première explication relative à l'élément particulier au cours d'une première étape d'annotation 540.

Pour cela, l'expert réalise une activation du pointeur et déplace le pointeur tout en le maintenant actif. Par exemple, l'expert peut entourer l'élément particulier en positionnant son doigt sur une surface tactile à proximité dudit élément particulier, et faire le tour de cet élément particulier en maintenant le doigt appuyé sur la surface tactile.

Il convient de noter que, de manière classique, le dispositif collaboratif d'immersion 10 peut inclure des moyens de communication permettant à l'opérateur et à l'expert de se parler. Les annotations permettent à l'expert de mettre en évidence un élément particulier de l'environnement d'immersion de l'opérateur, et peuvent venir en complément de tels moyens de communication.

Au cours de la première étape d'annotation 540, la représentation du champ de vision de l'opérateur est gelée sur l'interface expert 310, tant que le pointeur est actif, pour permettre à l'expert de procéder à l'annotation et faire apparaître au moins un marqueur d'annotation.

L'au moins un marqueur d'annotation apparaît temporairement, par exemple durant une demi-seconde.

L'avantage de temps d'affichage relativement courts pour les marqueurs de l'étape de mise en évidence 530 et la première étape d'annotation 540 par rapport aux étapes précédentes du procédé selon l'invention, est qu'ils permettent de profiter de la sensibilité accrue de la vision humaine au mouvement. Ces marqueurs de mise en évidence et d'annotation permettent d'attirer efficacement l'attention de l'opérateur, et ils sont complétés par les autres marqueurs créés lors des autres étapes du procédé selon l'invention, qui sont davantage persistants et réalisés par ailleurs sur un support persistant.

Il est ensuite mis en œuvre une seconde étape d'annotation 550 au cours de laquelle l'expert fournit à l'opérateur des détails concernant l'élément particulier.

Au cours de cette seconde étape d'annotation 550, la représentation du champ de vision de l'opérateur est gelée sur l'interface expert 310, permettant ainsi à l'expert de réaliser des marqueurs d'annotations complémentaires. Contrairement à la première étape d'annotation 540 pour laquelle la représentation n'est gelée que durant le temps de pointage, au cours de la seconde étape d'annotation 550, la représentation du champ de vision de l'opérateur est gelée tant que l'expert ne quitte pas volontairement ce mode d'annotation et ou tant qu'un temps prédéfini de gel n'est pas écoulé.

L'image support des annotations de l'expert, elle-même étant une capture du champ de vision de l'opérateur, peut être transmise puis affichée sur l'interface opérateur 210 de sorte qu'elle occupe au moins partiellement le champ de vision de l'opérateur. Son affichage peut avantageusement correspondre aux caractéristiques de projection connues de la caméra réelle ou virtuelle de l'opérateur et conserver ainsi autant que possible la perspective de l'opérateur. Elle peut également n'être qu'une image affichée à une position et orientation prédéterminée dans le champ de vision de l'opérateur, par exemple toujours en bas à gauche et toujours orientée vers l'opérateur, ou à une position et orientation fixe dans l'environnement d'immersion de l'opérateur, par exemple à une distance fixe et dans l'axe de vue de l'élément particulier visé. L'homme du métier comprendra que la position et l'orientation de la représentation visuelle de l'image support des annotations ne sont pas limitée aux exemples décrits ci-avant, et en particulier peuvent varier selon l'orientation de l'opérateur dans l'environnement d'immersion ; l'image peut également être manipulée par l'opérateur et ou l'expert et évoluer dans l'environnement d'immersion avec une inertie par rapport aux déplacements de l'opérateur.

Selon les modes de réalisation, d'autres caractéristiques de la représentation visuelle de l'image support dans l'environnement d'immersion peuvent varier, comme sa transparence ou le cadre qui l'entoure, celui-ci pouvant par exemple être inexistant ou au contraire particulièrement marqué pour bien marquer sa présence.

L'image support des annotations de l'expert étant ainsi visible par l'opérateur, les annotations réalisées par l'expert sur cette image sont transmises à l'opérateur pour qu'il les visualise sur leur support. Dans un mode de réalisation optimal, ces annotations sont transmises en continu, dès qu'elles sont réalisées par l'expert, pour supporter l'échange.

L'opérateur peut donc suivre en temps réel les annotations réalisées par l'expert.

La fin de la seconde étape d'annotation peut se faire par la fermeture de la vue gelée par l'expert, la fermeture de l'image support par l'opérateur, ou par le « dégel » de la vue gelée, les évènements de fin de cette seconde étape d'annotation pouvant être synchrones ou asynchrones entre les interfaces expert et opérateur. En complément, la fermeture de l'image support par l'opérateur peut résulter d'une interaction directe de l'opérateur (action sur un bouton par exemple) ou action indirecte de l'opérateur (par exemple déplacement de ses commandes à l'intérieur de la représentation de l'image support).

Avantageusement, une nouvelle fenêtre peut être affichée sur l'interface expert pour afficher en temps réel la vue de l'opérateur. Cette nouvelle fenêtre peut par exemple être un médaillon, soit une fenêtre miniature affichée dans un coin de la fenêtre principale.

Dans un mode de mise en œuvre, la fin de la seconde étape d'annotation peut se faire par la mise en plein écran de la vue temps réel.

Il convient de noter que, dans la mesure où les marqueurs créés au cours du procédé selon l'invention sont affichés dans le champ de vision de l'opérateur, lequel est affiché sur l'interface expert, les marqueurs apparaîtront de fait sur l'interface expert et il n'est pas nécessaire de créer spécifiquement dans l'application logicielle expert 300 des marqueurs destinés à l'interface expert, l'application logicielle expert 300 peut toutefois prévoir la visualisation de ces marqueurs.

Il convient également de noter que l'invention met en œuvre des marqueurs de natures différentes, à savoir notamment des annotations manuelles (annotations dessinées à la main pour mettre en avant un élément particulier ou une zone du champ de vision de l'opérateur), des annotations symboliques (annotations résultant d'un placement de symboles connus et porteurs de sens, comme une flèche, pour mettre en avant de façon clairement identifiée des éléments ou régions du champ de vision de l'opérateur, ou comme le marqueur de déplacement) et des marqueurs d'orientation. Bien que le procédé selon l'invention puisse être mis en œuvre au moins en partie grâce à un ensemble de boutons permettant de passer d'un type de marqueurs à un autre, il est avantageusement utilisé une interface expert 310 telle que décrite plus haut, et qui est divisée en une zone dans laquelle les actions de pointage sont interprétées comme des annotations manuelles ou symboliques ou comme des marqueurs de déplacement, et une zone dans laquelle les actions de pointage vont conduire à la création de marqueurs d'orientation. Avantageusement, ces zones correspondent respectivement à une zone centrale et à une zone périphérique, tel qu'il a été décrit plus haut, et la zone périphérique peut être associée à un flou, afin de simuler une vision centrale et une vision périphérique.

A titre d'exemple, une action de pointage dans la zone périphérique 3111 conduit par exemple à la création d'un marqueur d'orientation, et une action de pointage dans la zone centrale 3110 à la création d'un marqueur de déplacement. Un élément d'interface 312 de type bouton par exemple peut permettre de changer l'interprétation d'une action de pointage dans la zone centrale, qui peut être interprétée après un clic sur le bouton comme une annotation.

L'application logicielle expert peut également interpréter la fin de l'étape d'orientation 510, c'est-à-dire une orientation correcte de la tête de l'opérateur, comme le passage à l'étape de déplacement 520, et ainsi associer le ou les pointages suivants à des marqueurs de déplacement, jusqu'à la fin de l'étape de déplacement 520.

De même, la fin de la première étape d'annotation 540 pourra être interprétée par l'application logicielle comme le passage à la seconde étape d'annotation 550, et donc associer les pointages à venir comme des annotations plus persistantes que celles associées à la première étape d'annotation, jusqu'à la fin de la seconde étape d'annotation.

L'invention permet donc d'interpréter les interactions de l'expert guidant l'opérateur relativement à ce que voit l'opérateur dans son environnement d'immersion et non pas par rapport à une connaissance de l'environnement d'immersion.

Une segmentation de l'interface expert permet par ailleurs de simplifier l'interprétation par l'application logicielle expert des pointages de l'expert, et ainsi passer d'un type de marqueurs à un autre en limitant le nombre d'opérations à réaliser par l'expert.

L'invention n'est bien entendu pas limitée aux modes de réalisation et de mise en œuvre détaillés ci-dessus. En particulier, l'invention peut s'appliquer à plus d'un opérateur et ou plus d'un expert, les systèmes immersifs et d'assistance associés pouvant être reliés à une même unité centrale, ou au contraire être distants et reliés entre eux par divers moyens de transmission de données, par exemple une connexion réseau.

Également, les marqueurs de déplacement, le guide plan, et les marqueurs d'annotation sont avantageusement des marqueurs dynamiques dont des caractéristiques, notamment de taille et de position, peuvent évoluer en fonction du mouvement de l'opérateur et ou de sa position d'observation et ou de sa direction d'observation. Par exemple, le marqueur de déplacement peut grossir au fur et à mesure que l'opérateur s'en rapproche dans l'environnement d'immersion.

De même, les diverses étapes du procédé 500 peuvent également être mises en œuvre dans un ordre différent de celui dans lequel elles sont décrites ici, ou peuvent être ignorées si elles ne sont pas nécessaires. Par exemple, l'étape de mise en évidence 530 peut être ignorée si l'élément particulier apparaît de manière évidente à l'opérateur de par sa taille.

## Revendications

1. Procédé (500) d'interaction entre au moins un utilisateur opérateur d'un système immersif (20), ledit utilisateur opérateur étant immergé dans un environnement d'immersion dont il visualise une représentation sur une interface opérateur (210), et au moins un utilisateur expert d'un système d'assistance (30) comportant une interface expert (310) et au moins un outil de pointage pour interagir avec l'interface opérateur, ladite interface expert affichant uniquement une représentation visuelle du champ de vision de l'utilisateur opérateur immergé et comportant une fenêtre principale (311) divisée en au moins deux zones distinctes contiguës permettant d'interpréter d'au moins deux manières différentes une action de pointage, ledit procédé étant **caractérisé en ce qu'**il comprend une étape d'orientation (510) au cours de laquelle l'utilisateur expert oriente le regard de l'utilisateur opérateur en faisant apparaître dans son champ de vision au moins un marqueur d'orientation (2300) en réalisant au moins un pointage, sur une zone périphérique de l'interface expert, au moyen de l'au moins un outil de pointage sur l'interface expert (310), afin d'attirer son attention sur une zone d'intérêt de l'environnement d'immersion, une étape de déplacement (520) au cours de laquelle l'utilisateur expert fournit une indication de déplacement à l'utilisateur opérateur en faisant apparaître dans son champ de vision au moins un marqueur de déplacement (2310) en réalisant au moins un pointage sur l'interface expert (310).

2. Procédé selon la revendication 1 **caractérisé en ce que** le marqueur d'orientation reste apparent dans le champ de vision de l'utilisateur opérateur tant que l'utilisateur expert réalise le pointage.

3. Procédé selon la revendication 1 ou la revendication 2 **caractérisé en ce que** le marqueur d'orientation disparaît automatiquement au bout d'un temps prédéfini après que l'utilisateur expert ait cessé le pointage.

4. Procédé selon l'une quelconque des revendications précédentes **caractérisé en ce que** le marqueur d'orientation est actualisé en temps réel en fonction du pointage réalisé par l'utilisateur expert.

5. Procédé selon l'une quelconque des revendications précédentes **caractérisé en ce qu'**au cours de l'étape de déplacement (520), un guide plan est déterminé par le système d'assistance (30), en se basant sur un système de coordonnées fourni par le système immersif (20) et sur l'hypothèse qu'un sol de l'environnement d'immersion est à une hauteur guide dans ledit système de coordonnées, ledit guide plan étant affiché sur l'interface expert (310) pour permettre à l'utilisateur expert de réaliser l'au moins un pointage.

6. Procédé selon la revendication 5 **caractérisé en ce que** la hauteur guide est ajustable de manière dynamique par l'utilisateur expert.

7. Procédé selon la revendication 6 **caractérisé en ce que** le guide plan est une grille ou un plan transparent ou un plan texturé.

8. Procédé selon la revendication 6 ou la revendication 7 **caractérisé en ce que** le guide plan est affiché sur l'interface opérateur (210).

9. Procédé selon l'une quelconque des revendications précédentes **caractérisé en ce qu'**au cours de l'étape de déplacement (520) l'utilisateur expert procède à une pluralité de pointages afin de faire apparaître une trajectoire dans le champ de vision de l'utilisateur opérateur.

10. Procédé selon l'une quelconque des revendications précédentes **caractérisé en ce qu'**au cours de l'étape de déplacement (520) une représentation du champ de vision de l'utilisateur opérateur sur l'interface expert (310) est gelée.

11. Procédé selon l'une quelconque des revendications précédentes **caractérisé en ce qu'**un marqueur de déplacement créé lors de l'étape de déplacement (520) disparaît après un temps de une à cinq secondes après que l'utilisateur expert ait cessé le pointage ayant conduit à la création dudit marqueur.

12. Procédé (500) selon l'une quelconque des revendications précédentes **caractérisé en ce qu'**il comprend par ailleurs une étape de mise en évidence (530) au cours de laquelle l'utilisateur expert attire l'attention de l'utilisateur opérateur sur un élément particulier de son champ de vision au moyen d'au moins un marqueur de mise en évidence créé en réalisant un pointage ponctuel.

13. Procédé (500) selon la revendication 12 **caractérisé en ce que** le marqueur de mise en évidence est affiché dans le champ de vision de l'utilisateur opérateur pendant une durée inférieure à une seconde.

14. Procédé (500) selon l'une quelconque des revendications précédentes **caractérisé en ce qu'**il comprend par ailleurs une première étape d'annotation (540), au cours de laquelle l'utilisateur expert fait apparaître dans le champ de vision de l'utilisateur opérateur au moins un marqueur d'annotation.

15. Procédé (500) selon la revendication 14 **caractérisé en ce qu'**au cours de la première étape d'annotation (540), une représentation du champ de vision de l'opérateur est gelée sur l'interface expert (310).

## Patentansprüche

1. Verfahren (500) zur Interaktion zwischen mindestens einem Bedienerbenutzer eines immersiven Systems (20), wobei der Bedienerbenutzer in eine immersive Umgebung eingetaucht ist, deren Darstellung er auf einer Bedienerschnittstelle (210) visualisiert, und mindestens einem Expertenbenutzer eines Assistenzsystems (30), das eine Expertenschnittstelle (310) und mindestens ein Ausrichtungswerkzeug zum Interagieren mit der Bedienerschnittstelle aufweist, wobei die Expertenschnittstelle nur eine visuelle Darstellung des Sichtfelds des eingetauchten Bedieners anzeigt und ein Hauptfenster (311) aufweist, das in mindestens zwei benachbarte, getrennte Bereiche unterteilt ist, die es ermöglichen, eine Ausrichtaktion auf mindestens zwei verschiedene Weisen zu interpretieren, wobei das Verfahren **dadurch gekennzeichnet ist, dass** es einen Orientierungsschritt (510) umfasst, bei dem der Expertenbenutzer den Blick des Bedienerbenutzers orientiert, indem er in seinem Sichtfeld mindestens einen Orientierungsmarker (2300) erscheinen lässt, indem er mindestens eine Ausrichtung auf einen Randbereich der Expertenschnittstelle mittels des mindestens einen Ausrichtungswerkzeugs auf die Expertenschnittstelle (310) durchführt, um seine Aufmerksamkeit auf einen interessierenden Bereich der immersiven Umgebung zu lenken, und einen Verschiebungsschritt (520), bei dem der Expertenbenutzer dem Bedienerbenutzer eine Verschiebungsanzeige liefert, indem er in seinem Sichtfeld mindestens einen Verschiebungsmarker (2310) erscheinen lässt, indem er mindestens eine Ausrichtung auf die Expertenschnittstelle (310) durchführt.

2. Verfahren nach Anspruch 1, **dadurch gekennzeichnet, dass** der Orientierungsmarker in dem Sichtfeld des Bedienerbenutzers sichtbar bleibt, solange der Expertenbenutzer die Ausrichtung durchführt.

3. Verfahren nach Anspruch 1 oder Anspruch 2, **dadurch gekennzeichnet, dass** der Orientierungsmarker nach einer vordefinierten Zeit automatisch verschwindet, nachdem der Expertenbenutzer die Ausrichtung beendet hat.

4. Verfahren nach einem der vorhergehenden Ansprüche, **dadurch gekennzeichnet, dass** der Orientierungsmarker in Echtzeit in Abhängigkeit von der von dem Expertenbenutzer durchgeführten Ausrichtung aktualisiert wird.

5. Verfahren nach einem der vorhergehenden Ansprüche, **dadurch gekennzeichnet, dass** während des Verschiebungsschritts (520) ein ebener Führer von dem Assistenzsystem (30) bestimmt wird, basierend auf einem von dem immersiven System (20) gelieferten Koordinatensystem und auf der Annahme, dass sich ein Boden der immersiven Umgebung in einer Führungshöhe in dem Koordinatensystem befindet, wobei der ebene Führer auf der Expertenschnittstelle (310) angezeigt wird, damit der Experte mindestens eine Ausrichtung durchführen kann.

6. Verfahren nach Anspruch 5, **dadurch gekennzeichnet, dass** die Führungshöhe von dem Expertenbenutzer dynamisch einstellbar ist.

7. Verfahren nach Anspruch 6, **dadurch gekennzeichnet, dass** der ebene Führer ein Gitter oder eine transparente Ebene oder eine strukturierte Ebene ist.

8. Verfahren nach Anspruch 6 oder Anspruch 7, **dadurch gekennzeichnet, dass** der ebene Führer auf der Bedienerschnittstelle (210) angezeigt wird.

9. Verfahren nach einem der vorhergehenden Ansprüche, **dadurch gekennzeichnet, dass** der Expertenbenutzer während des Verschiebungsschritts (520) eine Vielzahl von Ausrichtungen durchführt, um eine Bahn in dem Sichtfeld des Bedienerbenutzers erscheinen zu lassen.

10. Verfahren nach einem der vorhergehenden Ansprüche, **dadurch gekennzeichnet, dass** während des Verschiebungsschritts (520) eine Darstellung des Sichtfelds des Bedienerbenutzers auf der Expertenschnittstelle (310) eingefroren ist.

11. Verfahren nach einem der vorhergehenden Ansprüche, **dadurch gekennzeichnet, dass** ein in dem Verschiebungsschritt (520) erstellter Verschiebemarker nach einer Zeit von einer bis fünf Sekunden verschwindet, nachdem der Expertenbenutzer die Ausrichtung beendet hat, die zu der Erstellung des Markers geführt hat.

12. Verfahren (500) nach einem der vorhergehenden Ansprüche, **dadurch gekennzeichnet, dass** es ferner einen Hervorhebungsschritt (530) umfasst, bei dem der Expertenbenutzer den Bedienerbenutzer mittels mindestens eines Hervorhebungsmarkers, der durch das Durchführen einer Ausrichtung erstellt wird, seine Aufmerksamkeit auf ein bestimmtes Element seines Sichtfelds lenkt.

13. Verfahren (500) nach Anspruch 12, **dadurch gekennzeichnet, dass** der Hervorhebungsmarker für eine Dauer von weniger als einer Sekunde in dem Sichtfeld des Bedienerbenutzers angezeigt wird.

14. Verfahren (500) nach einem der vorhergehenden Ansprüche, **dadurch gekennzeichnet, dass** es ferner einen ersten Anmerkungsschritt (540) umfasst, bei dem der Expertenbenutzer in dem Sichtfeld des Bedienerbenutzers mindestens einen Anmerkungsmarker erscheinen lässt.

15. Verfahren (500) nach Anspruch 14, **dadurch gekennzeichnet, dass** während des ersten Anmerkungsschritts (540) eine Darstellung des Sichtfelds des Bedieners auf der Expertenschnittstelle (310) eingefroren ist.

## Claims

1. Method (500) for interacting between at least one operator user of an immersive system (20), said operator user being immersed in an immersion environment a representation of which it views on an operator interface (210), and at least one expert user of an assistance system (30) comprising an expert interface (310) and at least one pointing tool for interacting with the operator interface, said expert interface displaying only a visual representation of the field of view of the immersed operator user and comprising a main window (311) divided into at least two separate contiguous areas making it possible to interpret a pointing action in at least two different ways, said method being **characterized in that** it comprises an orientation step (510) wherein the expert user orients the days of the operator user by making appear in his field of view at least one orientation marker (2300) by performing at least one pointing, on a peripheral area of the expert interface, by means of the at least one pointing tool on the expert interface (310), in order to draw his attention to an area of interest of the immersion environment, a movement step (520) wherein the expert user provides a movement indication to the operator user by making at least one movement marker (2310) appear in his field of view by performing at least one pointing on the expert interface (310).

2. Method according to claim 1, **characterized in that** the orientation marker remains visible in the field of view of the operator user as long as the expert user performs the pointing.

3. Method according to claim 1 or claim 2, **characterized in that** the orientation marker automatically disappears after a predefined time after the expert user has stopped pointing.

4. Method according to any one of the preceding claims, **characterized in that** the orientation marker is updated in real time according to the pointing performed by the expert user.

5. Method according to any one of the preceding claims **characterized in that**, during the movement step (520), a plane guide is determined by the assistance system (30), based on a coordinate system provided by the immersive system (20) and on the assumption that a floor of the immersion environment is at a guide height in said coordinate system, said plane guide being displayed on the expert interface (310) to allow the expert user to perform at least one pointing.

6. Method according to claim 5, **characterized in that** the guide height is dynamically adjustable by the expert user.

7. Method according to claim 6 **characterized in that** the plane guide is a grid or a transparent plane or a textured plane.

8. Method according to claim 6 or claim 7, **characterized in that** the plane guide is displayed on the operator interface (210).

9. Method according to any one of the preceding claims, **characterized in that**, during the movement step (520) the expert user carries out a plurality of pointings in order to make a trajectory appear in the field of view of the operator user.

10. Method according to any one of the preceding claims, **characterized in that**, during the movement step (520) a representation of the field of view of the operator user on the expert interface (310) is frozen.

11. Method according to any one of the preceding claims, **characterized in that** a movement marker created during the movement step (520) disappears after a time of one to five seconds after the expert user has stopped the pointing that led to the creation of said marker.

12. Method (500) according to any one of the preceding claims **characterized in that** it further comprises a highlighting step (530) during which the expert user draws the attention of the operator user to a particular element of their field of view by means of at least one highlighting marker created by performing a pointing at one point.

13. Method (500) according to claim 12, **characterized in that** the highlighting marker is displayed in the field of view of the operator user for a duration of less than one second.

14. Method (500) according to any one of the preceding claims **characterized in that** it further comprises a first annotation step (540), during which the expert user makes at least one annotation marker appear in the field of view of the operator user.

15. Method (500) according to claim 14, **characterized in that**, during the first annotation step (540), a representation of the field of view of the operator is frozen on the expert interface (310).
